(19) **Europäisches Patentamt**
European Patent Office
Office européen des brevets

(11) **EP 1 803 786 B1**

(12) **EUROPÄISCHE PATENTSCHRIFT**

(45) Veröffentlichungstag und Bekanntmachung des Hinweises auf die Patenterteilung:
**09.07.2008 Patentblatt 2008/28**

(51) Int Cl.:
***C09D 177/02*** *(2006.01)*

(21) Anmeldenummer: **05112769.4**

(22) Anmeldetag: **22.12.2005**

(54) **Oberbelagsmaterial**

Top layer material

Matériau pour une couchee supérieure

(84) Benannte Vertragsstaaten:
**AT CH DE FR IT LI**

(43) Veröffentlichungstag der Anmeldung:
**04.07.2007 Patentblatt 2007/27**

(73) Patentinhaber: **EMS-CHEMIE AG**
**7013 Domat/Ems (CH)**

(72) Erfinder:
• **Stöppelman, Georg**
**7402 Bonaduz (CH)**
• **Bayer, Andreas**
**7012 Felsberg (CH)**

• **Schwitter, Paul**
**8718 Schänis (CH)**
• **Stolarz, Alex**
**7402 Bonaduz (CH)**

(74) Vertreter: **Bremi, Tobias Hans**
**Isler & Pedrazzini AG**
**Gotthardstrasse 53**
**Postfach 1772**
**8027 Zürich (CH)**

(56) Entgegenhaltungen:
**EP-A- 0 779 084         EP-A- 1 557 372**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

TECHNISCHES GEBIET

Die vorliegende Erfindung betrifft einen Oberbelag, welcher als Schutzschicht und/oder als Druckträger z.B. für Sportgeräte wie Skier, Snowboards, Stöcke, Schläger etc. oder für Gehäuse von Geräten wie Haushaltsgeräte, Elektrogeräte, Möbel, Maschinen verwendet werden kann. Der Oberbelag besteht aus einer Einschichtfolie aus einer Schicht auf Basis von PA 6/12 oder aus einer Mehrschichtfolie mit wenigstens einer Schicht auf Basis von PA 6/12.

STAND DER TECHNIK

Zum oberflächlichen Schutz von Objekten wie beispielsweise Dekorartikeln, Skipässen, Displayabdeckungen aber auch von Oberseiten von Skiern und Snowboards werden als Oberbeläge Schutzfolien eingesetzt. Diese Schutzfolien, welche auf die zu schützende Fläche auflaminiert werden, bestehen in der Regel aus einem Kunststoffmaterial, welches spezielle Anforderungen erfüllen muss. Es muss ausreichende mechanische Werte besitzen so z.B. hinsichtlich Kratzfestigkeit, Schlagzähigkeit und E-Modul. Darüber hinaus muss während des gesamten Verarbeitungsprozesses eine ausreichende Formstabilität erhalten bleiben und das Material darf während der Lagerung der kalandrierten und geschnittenen Folien in Stapeln nicht blocken. Das Material soll zudem für eine rückseitige Bedruckung bedruckbar und transparent sein, und es sollte farbneutral sein. Das Kunststoffinaterial kann dabei aus einer einzigen Schicht bestehen, es kann aber auch eine Mehrschichtstruktur aufweisen. Weiterhin sollte eine gute Hitzebeständigkeit bei der Verarbeitung, die Eignung für Sublimierdruck, eine gute Tiefziehbarkeit oder Thermoformbarkeit, eine gute UV-Beständigkeit gegeben sein.

Aus dem Bereich der Herstellung von Skiern ist beispielsweise aus der WO-A-2004/020054 ein Verfahren zur Herstellung von Skiern sowie eine Mehrschichtfolie zur Verwendung in einem solchen Verfahren bekannt. Die Mehrschichtstruktur besteht dabei aus unterschiedlichsten polymeren Werkstoffen wie beispielsweise ABS (Acrylnitril/Butadien/Styrol), PC (Polycarbonat), PS (Polystyrol) etc., und eine solche Folie wird bedruckt und anschliessend auf der der Lauffläche gegenüberliegenden Seite des Skis aufgebracht. Dabei wird zunächst die Mehrschichtfolie in verschiedenen Extrusions-, Bedruckungs- und Laminierverfahren hergestellt und anschliessend mit dem Ski-Grundkörper verklebt. Bei anderen Artikeln, wie zum Beispiel hinterspritzten Gehäusen, wird zunächst die Mehrschichtfolie in einem Thermoformprozess in die gewünschte Form gebracht und anschliessend mit dem Bauteil verklebt oder hinterspritzt.

Eine Übersicht über die Verwendung von Schutz- und Dekorfolien unter anderem für den alpinen Sportbereich findet sich in der Publikation "Schön und robust - Schutz- und Dekorfolien aus Polyamiden" von Michael Beyer und Dr. Jörg Lohmar (Kunststoffe 1/2000, Carl-Hanser-Verlag). Darin wird die Verwendung von teilkristallinem Polyamid 12 beschrieben zum Beispiel als Schutz- und Dekorfolien für Ski, Snowboards, Spezialsportschuhe oder Schläger für verschiedene Sportarten, sowie aber auch für Textilien, Möbel, Werbeflächen, im Automobilbereich, Geschirr oder Haushaltsgeräte, Schilder, Böden, Hausfassaden etc..

Als Verfahren zur Herstellung der endgültigen Artikel unter Verwendung solcher Folien werden verschiedene Techniken vorgeschlagen, so beispielsweise auch das Hinterspritzen einer Folie in einem Spritzgussverfahren (In-mould decoration, IMD, sowie In-mould labelling, IML).

Es wird hervorgehoben, dass der kritischste Schritt stets die Verschweissung der Dekorfolien mit der Unterkonstruktion ist. Zur Verbesserung der Haftfähigkeit werden die Folien zum Teil entsprechend aufwändig durch Schleifen, Beflammen, Corona- oder Plasmabehandlung für die Verklebung vorbereitet.

Auch die EP-A-0 442 262 beschreibt ein Verfahren zur Herstellung von Skis, wobei in diesem Fall die gesamte Struktur des Ski in einer Form hergestellt wird, und auf der Oberseite eine Schutzschicht ebenfalls aus einem transparenten Kunststoff vorgesehen wird. Diese Schutzschicht besteht dabei aus einem Polymer, welches unter der Einwirkung von Hitze aushärtet, d.h. polymerisiert.

Um eine angenehme optische Erscheinung von solchen Sportartikeln erreichen zu können, werden, wie bereits erwähnt, derartige Folien vorgängig bedruckt. Entsprechend beschreibt die EP-A-0 774 365 ein Verfahren zum bedrucken einer solchen Schutzfolie, welche beispielsweise aus Polyamid (PA) bestehen kann, oder aber auch aus Polycarbonat oder ABS.

In der WO-A-00/23512 wird ein semi-kristallines thermoplastisches Material beschrieben, auf Basis von Polyamid, welches für solche Anwendungen geeignete mechanische Eigenschaften aufweist. Beschrieben werden darin teilkristalline Polymere mit dispergierten anorganischen festen Partikeln mit mindestens einer Dimension < 100 nm. Als Polymere für solche Materialien wird unter anderem PA beschrieben, unter vielen z.B. PA6, PA12, PA 6I, PA 610, PA66, PA612 etc. sowie Copolymere oder Mischungen daraus. Daraus hergestellte Formteile sollen hochtransparent sein, wobei die Wirkung der Nanopartikel als Nukleirungsmittel herausgestrichen wird.

Die EP-A-0 734 833 beschreibt ein thermoplastisches Material, welches beispielsweise als transparente Folie für einen Ski verwendet werden kann. Als Material für eine solche transparente Folie, welche aber nicht an der Oberfläche des Ski angeordnet sein soll, da darüber in einem Spritzgussverfahren eine weitere Schicht aus einem thermoplastischen Material erzeugt wird, werden unter anderem Folien aus Polyamid vorgeschlagen, wobei sowohl Homopolyamide wie beispielsweise unter anderem PA 6, PA 66, PA 12, PA 11, oder als Alternative dazu Mischungen von z.B. Polyolefinen oder Copolyamiden wie beispielsweise PA 6/12 erwähnt werden.

Weiterhin beschreibt die US-A-2005/0084685 eine Mehrschichtstruktur auf Basis von Polyamid und thermoplastischem Polyurethan (TPU). Geschützt werden dabei Mehrschichtsysteme aus einer transparenten PA-Schicht und einer TPU-Schicht, wobei PA aus semiaromatischen, semicycloaliphatischen oder aliphatischen Polyamiden gewählt wird, speziell unter anderem PA11 und PA12, PA 612, PA 69 bis PA1212 sowie PA11/12 bzw. PA12/11 mit mind. 90% PA11 oder PA12. Die Anwendung für dekorative Artikel, speziell für PU-Schäume und -Formen, speziell Ski und Schuhe wird beschrieben.

Die WO-A-2004/037898 beschreibt transparentes PEBA (Polyetherblockamid) mit PTMG-Blöcken (Polytetramethylenglykol-Blöcke) mit Mn=200-4000 g/mol und semikristallinen linearen aliphatischen PA (ausgeschlossen: cyclische und verzweigte) wie z.B. PA 612, PA 912, PA 1010, PA 1012 etc. mit ausreichender Comonomermenge, um Kristallinität zu minimieren und Kompatibilität zu PEBA zu gewährleisten. Die Shore-Härte D liegt zwischen 20-70. Anwendung u.a. für Sportschuhe.

Auch die US-A-2002/0173596 beschreibt ein transparentes Material, welches als äusserste obere Schicht für einen Ski geeignet zu sein scheint. Beschrieben werden transparente PA mit wenigstens einer cycloaliphatischen Komponente (5-40%) (B). Weitere Bestandteile: 0-40% PEBA (C), 0-20% Compatibilizer (D), 0-40% Modifier (M), wobei C+D+M=0-50%. Der Rest zu 100% besteht aus einem allgemein semikristallinen PA, speziell PA11 und PA12 aber auch PA 612. Als Komponente C können dabei auch Copolyamide verwendet werden. Beschrieben wird dabei die Anwendung als Folien/Platten, speziell als transparente Schutzfolie, speziell für Ski.

Die EP-A-1 227 132 beschreibt ebenfalls ein transparentes Material auf Basis von Polyamid. Beschrieben werden transparente Polyamide mit wenigstens einer aromatischen Dicarbonsäure (5-40%) (B). Weitere Bestandteile sind: 0-40% PEBA (C), 0-20% Compatibilizer (D), wobei C+D=2-50% und B+C+D>=30%. Der Rest zu 100% ist wiederum allgemein semikristallines PA, speziell PA11 und PA12 aber auch PA 612. Beschrieben wird die Anwendung als Folien/Platten, speziell transparente Schutzfolien, speziell für Ski.

In der EP-A-0 779 084 B1 werden Oberbeläge für Skier/Snowboards aus einer Mono- oder coextrudierten Zweischichtfolie aus dem Copolyamid PA 6/12 mit einem Caprolactamanteil im Bereich von 60-98 Mol-% (entspricht 46 Gew.-% bis 97 Gew.-% Caprolactam) und optionaler Modifikation beschrieben. Als Modifikationen werden u.a. genannt: Kettenregler, Katalysator, Gleitmittel, Schlagzähmodifikatoren etc..

Die in der EP-A-0 779 084 geschützten Folien verziehen sich leider aber während der Verarbeitung unter Umständen in mehreren Dimensionen, so dass sie weder optimal verarbeitbar noch optimal lagerfähig sind. Ausserdem zeigen die Folien eine Tendenz zum Verkleben während der Lagerung in Stapeln, was zu einem unerwünschten Blocking-Effekt führt.

## DARSTELLUNG DER ERFINDUNG

Der Erfindung liegt u.a. die Aufgabe zugrunde, ein Folienmaterial z.B. für einen Oberbelag, eine Schutzschicht und/oder einen Druckträger z.B. für Skier/Snowboards aber auch für andere Anwendungen zu entwickeln, der alle obigen Anforderungen mindestens so gut, bevorzugt aber besser als die bisher verwendeten Polymere erfüllt, sowie wirtschaftlich vorteilhaft ist und ausserdem ein einfaches Herstellverfahren z.B. von Oberbelägen erlaubt. Insbesondere geht es darum, einen solchen Oberbelag umfassend eine Einschichtfolie aus einer Schicht auf Basis von PA 6/12 oder eine Mehrschichtfolie mit wenigstens einer Schicht auf Basis von PA 6/12 zu verbessern, wie er beispielsweise in der EP-A-0 779 084 beschrieben wurde.

Diese Aufgabe wird insbesondere durch einen Oberbelag resp. eine Folie gemäss Anspruch 1, eine Herstellung eines solchen Oberbelages nach Anspruch 20 und durch die Verwendung eines solchen Oberbelages gemäss Anspruch 22 gelöst.

Die Lösung dieser Aufgabe wird also unter anderem dadurch erreicht, dass die Schicht auf Basis von PA 6/12 zusätzlich wenigstens ein Polyamid-Homopolymer ausgewählt aus der Gruppe PA6, PA12, PA610, und/oder PA 612 enthält. Die erfindungsgemässe Folie oder Schicht ist somit eine Mischung (Blend oder Legierung) aus einem Copolyamid, speziell PA 6/12, und einem Homopolyamid wie angegeben, bevorzugtermassen PA 612. Die Nachteile des reinen Copolyamids können durch die Beimischung des Homopolyamids überraschenderweise überwunden werden.

Der Kern der Erfindung besteht somit u.a. darin, einem Substrat aus Copolyamid PA 6/12, insbesondere bevorzugt hergestellt durch die Copolymerisation der beiden Lactame Caprolactam und Laurinlactam, ein Polyamid aus der Gruppe PA6, PA610, PA612 oder PA12, hergestellt durch die Polykondensation von Diamin und Dicarbonsäure oder von ω-Aminocarbonsäure oder durch die Polymerisation von Lactam, beizumischen, wobei überraschenderweise u.a. die Formstabilität der Folie verbessert werden kann. Dies unerwarteterweise unter Beibehaltung der Transparenz. Im Stand der Technik finden sich insbesondere im Zusammenhang mit derartigen Verwendungen keine solchen PA-Legierungen beschrieben. Die Dokumente des Standes der Technik enthalten stets mindestens eine cycloaliphatische oder aromatische Komponente zur Erzielung der Transparenz. Diese Dokumente beschreiben also klassische Ansätze zur Erzielung transparenter Filme, z.B. durch Zugabe oder Verwendung von aromatischen und cycloaliphatischen Komponenten für amorphe Polymere. Es ist entsprechend völlig unerwartet, dass das Zumischen eines teilkristallinen Homopolyamids die Transparenz nicht verschlechtert.

Die geforderten Eigenschaften, u.a. kein Verzug nach der Kalandrierung und kein Blocken bei der Lagerung, sind komplexe Anforderungen, deren Lösung wie hiermit gefunden dem Fachmann per se keineswegs naheliegend sind.

Bevorzugt enthält ein solcher Oberbelag neben einem der oben angegebenen Polyamid-Hompolymeren, wie z.B. PA 612, und dem PA 6/12 keine weiteren Polyamide.

Gemäss einer ersten bevorzugten Ausführungsform enthält die Schicht auf Basis von PA 6/12 nur PA 612 als weitere Polyamid-Komponente, dies z.B. so, dass zwischen 85 - 5 Gew.-% PA6/12 und 15 - 95 Gew.-% PA612 enthalten sind, bevorzugt zwischen 80 - 15 Gew.-% PA6/12 und 20 - 85 Gew.-% PA612, insbesondere bevorzugt zwischen 75 - 25 Gew.-% PA6/12 und 25 - 75 Gew.-% PA612. Auch möglich ist es, dass die Schicht auf Basis von PA 6/12 wenigstens 10 Gew.-% PA 612, oder wenigstens 20 Gew.-% PA 612, bevorzugt wenigstens 25 Gew.-% PA 612, insbesondere bevorzugt wenigstens 35 Gew.-% PA 612 enthält, und die verbleibenden Gewichtsteile durch PA 6/12, gegebenenfalls versetzt mit weiteren Zusatzstoffen, gebildet werden.

Gemäss einer weiteren bevorzugten Ausführungsform enthält die Schicht auf Basis von PA 6/12 nur PA 610 als weitere Polyamid-Komponente, dies z.B. so, dass zwischen 60 - 5 Gew.-% PA6/12 und 40 - 95 Gew.-% PA610 enthalten sind, bevorzugt zwischen 50 - 10 Gew.-% PA6/12 und 50 - 90 Gew.-% PA610, insbesondere bevorzugt zwischen 30 - 15 Gew.-% PA6/12 und 70 - 85 Gew. % PA610.

Gemäss einer weiteren bevorzugten Ausführungsform enthält die Schicht auf Basis von PA 6/12 nur PA 6 als weitere Polyamid-Komponente, dies z.B. so, dass zwischen 90 - 5 Gew.-% PA6/12 und 10 - 95 Gew.-% PA6 enthalten sind, bevorzugt zwischen 80 - 10 Gew.-% PA6/12 und 20 - 90 Gew.-% PA6, insbesondere bevorzugt zwischen 75 - 25 Gew.-% PA6/12 und 25 - 75 Gew.-% PA6.

Gemäss einer anderen bevorzugten Ausführungsform enthält die Schicht auf Basis von PA 6/12 nur PA 12 als weitere Polyamid-Komponente, dies z.B. so, dass zwischen 85 - 50 Gew.-% PA6/12 und 10 - 50 Gew.-% PA12 enthalten sind, bevorzugt zwischen 80 - 50 Gew.-% PA6/12 und 20 - 50 Gew.-% PA12, insbesondere bevorzugt zwischen 75 - 60 Gew.-% PA6/12 und 25 - 40 Gew.-% PA12.

Im Speziellen ist nämlich überraschend, dass sich einige positive Eigenschaften des Polyamid-Hompolymeren, insbesondere bei PA 612, schon bei verhältnismässig geringem Anteil (zum Beispiel 25%) in der Legierung stark widerspiegeln bzw. sogar übertroffen werden. Bei den oben angegebenen Gew.-% sind diese normalerweise durch ein einzelnes der oben angegebenen Polyamid-Hompolymeren gegeben. Es ist aber auch möglich eine entsprechende Mischung der oben angegebenen Polyamid-Hompolymeren zu verwenden. So ist es beispielsweise möglich, dem PA 6/12 eine Mischung aus PA 6 und PA 12 beizufügen, wobei die Summe der beiden Bestandteile PA 6 und PA 12 dann beispielsweise wenigstens 10, 15 oder 20 Gew.-% ausmacht. Bevorzugtermassen handelt es sich bei den oben angegebenen Gew.-% aber jeweils um eine Situation, wo nur ein einziges der angegebenen Polyamid-Hompolymeren neben dem PA 6/12 in der Mischung vorhanden ist.

Eine weitere bevorzugte Ausführungsform ist dadurch gekennzeichnet, dass es sich bei den Zusatzstoffen um einen oder mehrere der Zusatzstoffe ausgewählt aus der Gruppe: Kettenregler, Katalysatoren, Gleitmittel, Antiblockingmittel, Stabilisatoren, insbesondere Hitzestabilisatoren, UV-Stabilisatoren, Pigmente, Farbstoffe und/oder Schlagzähigkeitsverbesserer handelt. Ebenfalls ist es möglich, einer solchen Schicht Nanofüllstoffe beizumischen. Als Nanofüllstoffe eignen sich solche Stoffe, welche im Nanometerbereich fein verteilt sind und somit eine ausreichende Transparenz erhalten bleibt. Die erfindungsgemäss eingesetzten nanoskaligen Füllstoffe sind bevorzugt ausgewählt aus der Gruppe der Oxide, Oxidhydrate von Bor, Aluminium, Calzium, Gallium, Indium, Silizium, Germanium, Zinn, Titan, Zirkon, Zink, Yttrium oder Eisen..

Bevorzugtermassen wird der Anteil an Copolymer derart eingestellt, dass das PA 6/12 einen Caprolactam-Anteil im Bereich von 60-98 Mol-% aufweist. Berücksichtigt man, dass die Umrechnung Mol-% Caprolactam → Gew.% Caprolactam nach folgender Formel möglich ist:

$$y = (11316 \times x) / (19732 - 84.16 \times x)$$

wobei y = Gew.% Caprolactam und x = Mol-% Caprolactam, so ergibt sich entsprechend ein Bereich von 46 - 97 Gew. % Caprolactam. Bevorzugt ist der Caprolactam-Anteil im Bereich von 55-98 Gew.%.

Bevorzugtermassen wird der Caprolactam-Anteil für die Verarbeitbarkeit so eingestellt, dass eine Schmelztemperatur von wenigstens 150° C sichergestellt ist.

Es erweist sich dabei als vorteilhaft, das PA 6/12 derart auszuwählen, dass es eine relative Viskosität im Bereich von 1.6 bis 2.0, bevorzugt im Bereich von 1.80 bis 1.90, aufweist, jeweils gemessen als 0.5 %-ige Lösung in m-Kresol. Analog erweist es sich als vorteilhaft, das Polyamid-Homopolymer im Falle von PA 6 derart auszuwählen, dass es eine relative Viskosität im Bereich von 3.0 bis 4.0, bevorzugt im Bereich von 3.5-3.8, aufweist, jeweils gemessen als 1.0 %-ige Lösung in Schwefelsäure aufweist. Im Fall von PA 12 ist eine relative Viskosität im Bereich von 2.0 bis 3.0 vorteilhaft, bevorzugt im Bereich von 2.1-2.4, jeweils gemessen als 0.5 %-ige Lösung in m-Kresol. Im Fall von PA610 ist eine relative Viskosität im Bereich von 1.5 bis 2.5, bevorzugt im Bereich von 1.8-2.2 vorteilhaft, jeweils gemessen als 0.5 %-ige Lösung in m-Kresol, und im Fall von PA 612 wird bevorzugt, wenn eine relative Viskosität im Bereich von 1.5 bis 2.5, bevorzugt im Bereich von 2.0-2.3, vorliegt, jeweils gemessen als 0.5 %-ige Lösung in m-Kresol.

Gemäss einer weiteren bevorzugten Ausführungsform ist der Oberbelag dadurch gekennzeichnet, dass die Einschichtfolie oder die Mehrschichtfolie bei einer Dicke von 500 $\mu$m einen Transparenzwert nach ASTM D1003, Lichtart C von wenigstens 90 % aufweist.

Gemäss einer weiteren bevorzugten Ausführungsform des Oberbelages ist dieser, respektive die Einschichtfolie oder die Mehrschichtfolie, dadurch gekennzeichnet, dass sie transparent oder zumindest durchscheinend ist. Weiterhin bevorzugtermassen ist er in einem Druckverfahren wie Sublimationsdruck bedruckbar. Überraschenderweise zeigt es sich, dass, bei der sukzessive zunehmenden Beimischung von PA 612, zwar die Härte im wesentlichen konstant bleibt, dass es aber möglich ist, den E-Modul (trocken) einzustellen. Da bereits eine geringe Zugabe der Polyamid-Homopolymer-Komponente den E-Modul in trockenem Zustand (Verarbeitungsbedingung) erhöht, der E-Modul in konditioniertem Zustand (Gebrauchsbedingung) sich jedoch nur langsam ändert, kann die Mischung den Verarbeitungsbedingungen bei der Folienherstellung angepasst werden. So beispielsweise in einem Bereich zwischen 1800 bis 2200 MPa. Dies erlaubt es, die Eigenschaften den Bedürfnissen entsprechend flexibel einzustellen.

Bevorzugtermassen handelt es sich bei der Struktur des Oberbelages um eine Einschichtfolie. Möglich ist aber auch eine Mehrschichtfolie, wobei dann wenigstens eine der Schichten dieser Mehrschichtfolie, beispielsweise eine Zweischichtfolie, die oben dargestellte Legierung aus PA 6/12 und PA 612 bildet, und weitere Schichten beispielsweise auf Basis von TPU, ABS/TPU, PA 11, PA 12, PA 11/12, PA 12/11 oder Mischungen davon vorhanden sein können. Es kann sich beim Material der zusätzlichen Schichten um thermoplastische Materialien wie bevorzugt thermoplastisches Polyurethan und dessen Mischungen (Blends) mit ABS oder um Polyamid 11 oder Polyamid 12 und dessen Mischungen respektive Copolymere handeln.

Weiterhin betrifft die vorliegende Erfindung ein Verfahren zur Herstellung eines Oberbelages, wie er oben beschrieben wurde. Dabei wird die Schicht durch eine Extrusion der compoundierten Bestandteile PA 6/12, wenigstens einem Polyamid-Homopolymer ausgewählt aus der Gruppe PA6, PA12, PA610, und/oder PA 612, sowie gegebenenfalls vorhandener Zusatzstoffe, bei einer Temperatur oberhalb von 200°C erzeugt. Im Falle einer Mehrschichtfolie kann diese Schicht zusammen mit einer oder mehreren weiteren Folienschichten coextrudiert werden. Nach dem Schritt der (Co) Extrusion folgt bevorzugtermassen ein Kalandrieren der Folie. Das Kalandrieren kann dabei zwischen geheizten Walzen erfolgen.

Es kann dabei auch noch eine (oder auch mehrere) weitere, insbesondere bevorzugt mit Pigmenten versetzte Schicht, vorgesehen werden. Beispielsweise ist es möglich, als Pigment Titandioxid zu verwenden und so eine weisse Hintergrundsschicht zu bewirken. Beispielsweise kann eine derartige Schicht auf Basis von funktionellen gepfropften Polyolefinen, ausgebildet sein, um die Haftung zu gewährleisten. Diese weitere Schicht kann zwischen der Schicht auf Basis von PA 6/12 und einem Druck (beispielsweise digitaler Druck, Ink-Jet, Sublimationsdruck, Tampondruck, etc.) angeordnet sein, oder aber bevorzugtermassen ist der Druck zwischen der Schicht auf Basis von PA 6/12 und dieser mit Pigmenten versetzten Schicht angeordnet.

Eine solche Folie kann anschliessend auf das zu schützende Substrat in einem vom Fachmann den Bedingungen angepassten Laminationsprozess unter Anwendung von Druck und/oder erhöhter Temperatur aufgebracht werden. Auch ein Verkleben des Oberbelages mit dem Substrat ist denkbar, oder ein Hinterspritzen wie z.B. in einem IMD (In-mould Decoration) oder einem IML (In-mould Labelling) - Verfahren..

Ausserdem betrifft die vorliegende Erfindung eine Verwendung eines Oberbelages, wie er oben beschrieben wurde, als oberflächlicher Schutz und/oder Druckträger für Sportgeräte wie insbesondere Skier, Snowboards, Surfboards, Skateboards, Stöcke, Schläger etc. oder für Gehäuse von Geräten wie Haushaltsgeräte, Elektrogeräte, Möbel, Geschirr, Textilien, Schuhe, Schilder, Böden, im Automobilbereich, Maschinen, oder als oberflächliche Schutzschicht für Displayabdeckungen, als oberflächliche Schutzschicht für Druckträger wie beispielsweise Skipässe, Dekorartikel etc..

Weitere bevorzugte Ausführungsformen der vorliegenden Erfindung sind in den abhängigen Ansprüchen beschrieben.


WEGE ZUR AUSFÜHRUNG DER ERFINDUNG

Die Erfindung soll anfolgend unter Zuhilfenahme von spezifischen Ausführungsbeispielen näher erläutert werden. Die angeführten Ausführungsbeispiele sollen dabei ausschliesslich zur Stützung und Erläuterung der Erfindung interpretiert werden, nicht aber zur Einschränkung des Schutzbereiches, wie er in den angehängten Patentansprüchen formuliert ist.

Eine Einschichtfolie wurde hergestellt, indem die beiden Komponenten Copolyamid PA 6/12 und Homopolyamid PA 612 in unterschiedlichen Anteilen (Versuche 1-7 sowie 14-16), Homopolyamid PA 610 in unterschiedlichen Anteilen (Versuche 8,9), Homopolyamid PA 6 in unterschiedlichen Anteilen (Versuche 10,11), und Homopolyamid PA 12 in unterschiedlichen Anteilen (Versuche 12,13). Jeweils zum Vergleich wurde auch ohne Mischung (C1-C4) compoundiert und einmal unter Zugabe von Hitze/UV-Stabilisatoren die Komponenten PA 6/12 und PA 612 (C5 und C6). Das compoundierte Material wurde anschliessend zu Folien extrudiert.

Als Copolyamid 6/12 wurde dabei ein Copolyamid mit einem Caprolactamanteil von 75 Gew.% und einer relativen Viskosität (RV) von 1,85 (gemessen als 0.5%-ige Lösung in m-Kresol) verwendet..

Als Homopolyamid wurden folgende Polymere eingesetzt: Polyamid 6 mit RV = 3.65 (1% in Schwefelsäure); Polyamid 610 mit RV = 2.0 (0.5% in m-Kresol); Polyamid 612 mit RV=2.1 (0.5% in m-Kresol); Polyamid 12 mit RV= 2.25 (0.5% in m-Kresol).

Die Vergleichsbeispiele C1 - C5 sowie die Beispiele 1 - 10 wurden auf einem Dr. Collin Laborextruder ZK 25 mit 3 kg/h Durchsatz compoundiert (Heizzonen 250°C). Die Vergleichsbeispiele C6-C7 und Beispiele 8-10 wurden in einer zusätzlichen Ausführung mit Hitze- und UV-Stabilisierung versehen (Zugabe bei der Compoundierung von Copolyamid und Homopolyamid) und auf einem Zweischneckenextruder Werner & Pfleiderer ZSK 25 mit 15 kg/h Durchsatz compoundiert.

Tabelle 1 zeigt die Gewichtsanteile der verschiedenen Versuche ohne Stabilisierung und Tabelle 2 die Gewichtsanteile der Versuche mit Hitze und UV-Stabilisierung.

Tabelle 1

|  | PA 6/12 (Gew.-%) | PA 612 (Gew.-%) | PA 610 (Gew.-%) | PA 6 (Gew.-%) | PA 12 (Gew.-%) |
|---|---|---|---|---|---|
| C1 | 100 |  |  |  |  |
| C2 |  | 100 |  |  |  |
| C3 |  |  | 100 |  |  |
| C4 |  |  |  | 100 |  |
| C5 |  |  |  |  | 100 |
| 1 | 75 | 25 |  |  |  |
| 2 | 50 | 50 |  |  |  |
| 3 | 5 | 95 |  |  |  |
| 4 | 25 |  | 75 |  |  |
| 5 | 75 |  |  | 25 |  |
| 6 | 25 |  |  | 75 |  |
| 7 | 75 |  |  |  | 25 |

Tabelle 2

|  | PA 6/12 (Gew.-%) | PA 612 (Gew.-%) | Hitze/UV-Stabilisator (Gew.-%) |
|---|---|---|---|
| C6 | 99 |  | 1 |
| C7 |  | 99 | 1 |
| 8 | 74 | 25 | 1 |
| 9 | 10 | 89 | 1 |
| 10 | 5 | 94 | 1 |

Die Varianten 1-10 wurden anschliessend mit den Vergleichsexperimenten C1-C7 unter Zuhilfenahme von Standardmessungen verglichen. Die Resultate sind in den Tabellen 3 und 4 zusammengestellt.

Ergebnisse:

Der E-Modul kann weitgehend eingestellt werden durch das Verhältnis Homo-PA zu CoPA 6/12. Schon geringe Zugaben von Homopolyamid verbessern überraschenderweise sowohl die Reissdehnung wie auch Kälteschlagzähigkeit (Charpy), während die Shore-D Härte weitgehend konstant bleibt und auch die Transparenz erhalten bleibt (vgl. Tabelle 3).

Tabelle 3

|  | C6 | C7 | 8 | 9 | 10 |
|---|---|---|---|---|---|
| E-Modul (trocken) /MPa [1] | 1600 | 2300 | 2050 | 2150 | 2300 |
| E-Modul (kond.) /MPa [1] | 500 | 1400 | 650 | 1300 | 1350 |
| Reissdehnung (trocken) /% [1] | >50 | 220 | 250 | 150 | 100 |
| Charpy-Kerbschlagzähigkeit (-30°C, trocken) /kJ/m2 [2] | 3 | 8 | 9 | 6 | 6 |
| Shore D Härte (trocken) [3] | 75 | 78 | 76 | 77 | 77 |
| Transparenz [4] | 92 | 88 | 90 | - [5] | - [5] |
| Trübung [4] | 18 | 35 | 14 | - [5] | - [5] |
| Klarheit [4] | 94 | 84 | 90 | - [5] | - [5] |
| 1) nach ISO 527<br>2) nach ISO 179/2-1eA<br>3) nach ISO 868<br>4) gemessen mit BYK Gardner Haze Guard Plus nach ASTM D 1003, Lichtart C, an 700 μm dicken Folien<br>5) nicht bestimmt. | | | | | |

Weitere positive Eigenschaften der Materialien sind wie folgt (vgl. Tabelle 4):

• erhöhte Dimensionsstabilität während/nach der Verarbeitung

• reduzierte innere Spannungen (Beurteilung durch Betrachtung mit Hilfe von Polfiltern)

• gute Kontakttransparenz

• kein Kleben/Blocking.

Tabelle 4

|  | Transparenz [1] | Trübung [1] | Klarheit [1] | Formstabilität [2] | Blocken [2] | Steifigkeit |
|---|---|---|---|---|---|---|
| C1 | 94 | 1 | 99 | -- | -- | - |
| C2 | 92 | 27 | 96 | + | - | + |
| C3 | 92 | 6 | 99 | + | - | + |
| C4 | 93 | 1 | 99 | + | - | + |
| C5 | 91 | 9 | 90 | + | + | ++ |
| 1 | 93 | 5 | 98 | + | + | + |
| 2 | 90 | 31 | 96 | + | + | ++ |
| 3 | 92 | 7 | 96 | + | + | + |
| 4 | 93 | 1 | 99 | + | + | ++ |
| 5 | 92 | 6 | 98 | + | + | + |

(fortgesetzt)

| | Transparenz [1] | Trübung [1] | Klarheit [1] | Formstabilität [2] | Blocken [2] | Steifigkeit |
|---|---|---|---|---|---|---|
| 6 | 92 | 2 | 93 | + | + | + |
| 7 | 91 | 17 | 97 | + | + | ++ |
| 1) gemessen mit BYK Gardner Haze Guard Plus nach ASTM D1003, Lichtart C, an 500 μm dicken Folien 2) qualitative Beurteilung der extrudierten Folien nach 4 Tagen Lagerung bei 25°C | | | | | | |

Die reinen Komponenten sind zwar ausreichend transparent (PA6/12, PA612, PA610, PA6; C1-C4) neigen jedoch zum Blocken, d.h. die Folien können nicht gegeneinander verschoben werden. PA12 (C5) zeigt gutes Blocking-Verhalten, ist jedoch nicht ausreichend transparent.

Die erfindungsgemässen Mischungen zeigen sowohl gute Kontakttransparenz, ausgedrückt in einem Transparenz-Wert von grösser 90 % nach ASTM D1003, als auch gutes Blocking-Verhalten. Darüber hinaus ist die Formstabilität und die Steifigkeit gut.

Die gefundenen Folien zeigten sich als unter anderem für die folgenden Anwendungen geeignet:

Oberbeläge für Ski/Snowboards u.a. Wintersportartikel. Oberbeläge für Surfboards, Wellenbretter, Skateboards u.a. Sommersportartikel. Dazu werden Folien extrudiert, die anschliessend kalandriert und geschnitten werden. Nach einer Bedruckung der Rückseite durch Sublimationsdruck, Ink-Jet, Siebdruck, Tampondruck, Digitaldruck, etc. werden die Filme mit einer eventuellen zusätzlichen Folien auf der bedruckten Seite laminiert und so auf den Ski auflaminiert oder in einem IMD oder IML Verfahren eingesetzt. Eine mögliche Erweiterung auf allgemeine Anwendungen auf Schutzfolien ist zum Beispiel: Displayabdeckungen, Skipässe, Dekorartikel etc.

**Patentansprüche**

1. Oberbelag, insbesondere für Sportgeräte wie Skier, Snowboards, Stöcke, Schläger etc. oder für Gehäuse von Geräten wie Haushaltsgeräte, Elektrogeräte, Möbel, Maschinen, umfassend eine Einschichtfolie aus einer Schicht auf Basis von PA 6/12 oder eine Mehrschichtfolie mit wenigstens einer Schicht auf Basis von PA 6/12, **dadurch gekennzeichnet, dass** die Schicht auf Basis von PA 6/12 zusätzlich wenigstens ein Polyamid-Homopolymer ausgewählt aus der Gruppe PA6, PA12, PA610, und/oder PA 612 enthält.

2. Oberbelag nach Anspruch 1, **dadurch gekennzeichnet, dass** die Schicht auf Basis von PA 6/12 zusätzlich im wesentlichen nur PA 612 als weiteres Polyamid, gegebenenfalls versetzt mit weiteren Zusatzstoffen, enthält.

3. Oberbelag nach Anspruch 1 oder 2, **dadurch gekennzeichnet, dass** die Schicht auf Basis von PA 6/12 zwischen 85 - 5 Gew.-% PA6/12 und 15 - 95 Gew.-% PA612 enthält, bevorzugt zwischen 80-15 Gew.-% PA6/12 und 20 - 85 Gew.% PA612, insbesondere bevorzugt zwischen 75 - 25 Gew.-% PA6/12 und 25 - 75 Gew.-% PA612.

4. Oberbelag nach einem der Ansprüche 1 oder 2, **dadurch gekennzeichnet, dass** die Schicht auf Basis von PA 6/12 wenigstens 10 Gew.-% PA 612, oder wenigstens 20 Gew.-% PA 612, bevorzugt wenigstens 25 Gew.-% PA 612, insbesondere bevorzugt wenigstens 35 Gew.-% PA 612 enthält, und die verbleibenden Gewichtsteile durch PA 6/12, gegebenenfalls versetzt mit weiteren Zusatzstoffen, gebildet werden.

5. Oberbelag nach Anspruch 1, **dadurch gekennzeichnet, dass** die Schicht auf Basis von PA 6/12 zusätzlich im wesentlichen nur PA 610 als weiteres Polyamid, gegebenenfalls versetzt mit weiteren Zusatzstoffen, enthält.

6. Oberbelag nach Anspruch 1 oder 5, **dadurch gekennzeichnet, dass** die Schicht auf Basis von PA 6/12 zwischen 60 - 5 Gew.-% PA6/12 und 40 - 95 Gew.-% PA610 enthält, bevorzugt zwischen 50 - 10 Gew.-% PA6/12 und 50 - 90 Gew.% PA610, insbesondere bevorzugt zwischen 30-15 Gew.-% PA6/12 und 70-85 Gew. % PA610.

7. Oberbelag nach Anspruch 1, **dadurch gekennzeichnet, dass** die Schicht auf Basis von PA 6/12 zusätzlich im wesentlichen nur PA 6 als weiteres Polyamid, gegebenenfalls versetzt mit weiteren Zusatzstoffen, enthält.

8. Oberbelag nach Anspruch 1 oder 7, **dadurch gekennzeichnet, dass** die Schicht auf Basis von PA 6/12 zwischen

EP 1 803 786 B1

90 - 5 Gew:% PA6/12 und 10 - 95 Gew.-% PA6 enthält, bevorzugt zwischen 80 - 10 Gew.-% PA6112 und 20 - 90 Gew.-% PA6, insbesondere bevorzugt zwischen 75 - 25 Gew.-% PA6/12 und 25 - 75 Gew.-% PA6.

9. Oberbelag nach Anspruch 1, **dadurch gekennzeichnet, dass** die Schicht auf Basis von PA 6/12 zusätzlich im wesentlichen nur PA 12 als weiteres Polyamid, gegebenenfalls versetzt mit weiteren Zusatzstoffen, enthält.

10. Oberbelag nach Anspruch 1 oder 9, **dadurch gekennzeichnet, dass** die Schicht auf Basis von PA 6/12 zwischen 85 - 50 Gew.-% PA6/12 und 10 - 50 Gew.-% PA12 enthält, bevorzugt zwischen 80 - 50 Gew.-% PA6/12 und 20 - 50 Gew.-% PA12, insbesondere bevorzugt zwischen 75 - 60 Gew.-% PA6/12 und 25 - 40 Gew.-% PA12.

11. Oberbelag nach einem der vorhergehenden Ansprüche, **dadurch gekennzeichnet, dass** die Schicht auf Basis von PA 6/12 mit Zusatzstoffen versetzt ist, wobei es sich bei den Zusatzstoffen um einen oder mehrere der Zusatzstoffe ausgewählt aus der Gruppe: Nanofüllstoffe, Kettenregler, Katalysatoren, Gleitmittel, Antiblockingmittel, Stabilisatoren, insbesondere Hitzestabilisatoren, UV-Stabilisatoren, Pigmente, Farbstoffe und/oder Schlagzähigkeitsverbesserer handelt.

12. Oberbelag nach einem der vorhergehenden Ansprüche, **dadurch gekennzeichnet, dass** das PA 6/12 einen Caprolactam-Anteil im Bereich von 46 - 98 Gew-%, bevorzugt im Bereich von 55 - 98 oder 60 - 80 Gew- %, aufweist und/oder dass das PA 6/12 einen Schmelzpunkt von wenigstens 150 °C aufweist.

13. Oberbelag nach einem der vorhergehenden Ansprüche, **dadurch gekennzeichnet, dass** das PA 6/12 eine relative Viskosität im Bereich von 1.6 bis 2.0, bevorzugt im Bereich von 1.80 bis 1.90, aufweist, jeweils gemessen als 0.5 %-ige Lösung in m-Kresol.

14. Oberbelag nach einem der vorhergehenden Ansprüche, **dadurch gekennzeichnet, dass** das Polyamid-Homopolymer im Falle von
PA 6 eine relative Viskosität im Bereich von 3.0 bis 4.0, bevorzugt im Bereich von 3.5-3.8, aufweist, jeweils gemessen als 1.0 %-ige Lösung in Schwefelsäure;
PA 12 eine relative Viskosität im Bereich von 2.0 bis 3.0, bevorzugt im Bereich von 2.1-2.4, aufweist, jeweils gemessen als 0.5 %-ige Lösung in m-Kresol;
PA610 eine relative Viskosität im Bereich von 1.5 bis 2.5, bevorzugt im Bereich von 1.8-2.2, aufweist, jeweils gemessen als 0.5 %-ige Lösung in m-Kresol;
PA 612 eine relative Viskosität im Bereich von 1.5 bis 2.5, bevorzugt im Bereich von 2.0-2.3, aufweist, jeweils gemessen als 0.5 %-ige Lösung in m-Kresol.

15. Oberbelag nach einem der vorhergehenden Ansprüche, **dadurch gekennzeichnet, dass** die Einschichtfolie oder die Mehrschichtfolie transparent und insbesondere bevorzugt in einem Druckverfahren wie Sublimationsdruck und/oder Ink-Jet-Druck und/oder Siebdruck und/oder Tampondruck und/oder Digitaldruck bedruckbar ist.

16. Oberbelag nach einem der vorhergehenden Ansprüche, **dadurch gekennzeichnet, dass** die Einschichtfolie oder die Mehrschichtfolie bei einer Dicke von 500 $\mu$m einen Transparenzwert nach ASTM D1003, Lichtart C von wenigstens 90 % aufweist.

17. Oberbelag nach einem der vorhergehenden Ansprüche, **dadurch gekennzeichnet, dass** die Einschichtfolie oder die Mehrschichtfolie ein E-Modul 1800 bis 2200 MPa aufweist.

18. Oberbelag nach einem der vorhergehenden Ansprüche, **dadurch gekennzeichnet, dass** es sich um eine Einschichtfolie handelt.

19. Oberbelag nach einem der Ansprüche 1-18, **dadurch gekennzeichnet, dass** eine weitere, insbesondere bevorzugt mit Pigmenten versetzte Schicht, beispielsweise auf Basis von funktionellen gepfropften Polyolefinen, angeordnet ist, wobei diese weitere Schicht zwischen der Schicht auf Basis von PA 6/12 und einem Druck angeordnet sein kann, oder aber bevorzugtermassen der Druck zwischen der Schicht auf Basis von PA 6/12 und dieser mit Pigmenten versetzten Schicht angeordnet ist.

20. Verfahren zur Herstellung eines Oberbelages nach einem der vorhergehenden Ansprüche, **dadurch gekennzeichnet, dass** die Schicht durch eine Extrusion der compoundierten Bestandteile PA 6/12, und wenigstens ein Polyamid-Homopolymer ausgewählt aus der Gruppe PA6, PA12, PA610, und/oder PA 612 sowie gegebenenfalls vorhandener Zusatzstoffe bei einer Temperatur oberhalb von 200°C erzeugt wird, wobei im Falle einer Mehrschichtfolie diese Schicht zusammen mit einer oder mehreren weiteren Folien coextrudiert werden kann, und wobei insbesondere bevorzugt nach dem Schritt der Extrusion ein Kalandrieren der Folie erfolgt.

21. Verfahren nach Anspruch 20, **dadurch gekennzeichnet, dass**, die Folie(n) auf das zu schützende und/oder zu dekorierende Substrat in einem Laminationsprozess unter Anwendung von Druck und/oder erhöhter Temperatur oder in einem Hinterspritzen aufgebracht wird.

22. Verwendung eines Oberbelages nach einem der Ansprüche 1-19 als oberflächlicher Schutz und/oder Druckträger für Sportgeräte wie insbesondere Skier, Snowboards, Stöcke, Surfbretter, Skateboards, Schläger etc. oder für Gehäuse von Geräten wie Haushaltsgeräte, Elektrogeräte, Möbel, Maschinen, oder als oberflächliche Schutzschicht für Geschirr, Textilien, Schuhe, Schilder, Böden, Displayabdeckungen, als oberflächliche Schutzschicht für Druckträger wie beispielsweise Skipässe, Dekorartikel.

**Claims**

1. A topcoat, in particular for sports devices, such as skis, snowboards, sticks, bats, rackets, etc., or for housings of devices, such as household devices, electrical devices, furniture, machines, comprising a single-layer foil composed of a layer based on PA 6/12 or comprising a multilayer foil with at least one layer based on PA 6/12,
   wherein
   the layer based on PA 6/12 also comprises at least one polyamide homopolymer selected from the group of PA6, PA12, PA610 and/or PA612.

2. The topcoat as claimed in claim 1, wherein the layer based on PA 6/12 also comprises in essence only PA612 as further polyamide, if appropriate with admixtures of further additives.

3. The topcoat as claimed in claim 1 or 2, wherein the layer based on PA 6/12 comprises from 85 to 5% by weight of PA 6/12 and from 15 to 95% by weight of PA612, preferably from 80 to 15% by weight of PA 6/12 and from 20 to 85% by weight of PA612, particularly preferably from 75 to 25% by weight of PA 6/12 and from 25 to 75% by weight of PA612.

4. The topcoat as claimed in claim 1 or 2, wherein the layer based on PA 6/12 comprises at least 10% by weight of PA612, or at least 20% by weight of PA612, preferably at least 25% by weight of PA612, particularly preferably at least 35% by weight of PA612, and the remaining parts by weight are formed by PA 6/12, if appropriate with admixtures of further additives.

5. The topcoat as claimed in claim 1, wherein the layer based on PA 6/12 also comprises in essence only PA610 as further polyamide, if appropriate with admixtures of further additives.

6. The topcoat as claimed in claim 1 or 5, wherein the layer based on PA 6/12 comprises from 60 to 5% by weight of PA 6/12 and from 40 to 95% by weight of PA610, preferably from 50 to 10% by weight of PA 6/12 and from 50 to 90% by weight of PA610, particularly preferably from 30 to 15% by weight of PA 6/12 and from 70 to 85% by weight of PA610.

7. The topcoat as claimed in claim 1, wherein the layer based on PA 6/12 also comprises in essence only PA6 as further polyamide, if appropriate with admixtures of further additives.

8. The topcoat as claimed in claim 1 or 7, wherein the layer based on PA 6/12 comprises from 90 to 5% by weight of PA 6/12 and from 10 to 95% by weight of PA6, preferably from 80 to 10% by weight of PA 6/12 and from 20 to 90% by weight of PA6, particularly preferably from 75 to 25% by weight of PA 6/12 and from 25 to 75% by weight of PA6.

9. The topcoat as claimed in claim 1, wherein the layer based on PA 6/12 also comprises in essence only PA12 as further polyamide, if appropriate with admixtures of further additives.

10. The topcoat as claimed in claim 1 or 9, wherein the layer based on PA 6/12 comprises from 85 to 50% by weight of PA 6/12 and from 10 to 50% by weight of PA12, preferably from 80 to 50% by weight of PA 6/12 and from 20 to 50% by weight of PA12, particularly preferably from 75 to 60% by weight of PA 6/12 and from 25 to 40% by weight of PA12.

11. The topcoat as claimed in any of the preceding claims, wherein the layer based on PA 6/12 has admixtures of additives, where the additives involve one or more of the additives selected from the group of: nanofillers, chain regulators, catalysts, lubricants, antiblocking agents, stabilizers, in particular heat stabilizers, UV stabilizers, pigments, dyes, and/or impact modifiers.

12. The topcoat as claimed in any of the preceding claims, wherein the PA 6/12 has caprolactam content in the range from 46 to 98% by weight, preferably in the range from 55 to 98 or 60 to 80% by weight, and/or wherein the melting point of the PA 6/12 is at least 150°C.

13. The topcoat as claimed in any of the preceding claims, wherein the relative viscosity of the PA 6/12 is in the range from 1.6 to 2.0, preferably in the range from 1.80 to 1.90, in each case measured on a 0.5% strength solution in m-cresol.

14. The topcoat as claimed in any of the preceding claims, wherein the relative viscosity of the polyamide homopolymer is in the case of PA6, in the range from 3.0 to 4.0, preferably in the range from 3.5 to 3.8, in each case measured on a 1.0% strength solution in sulfuric acid;
in the case of PA12, in the range from 2.0 to 3.0, preferably in the range from 2.1 to 2.4, in each case measured on a 0.5% strength solution in m-cresol;
in the case of PA610, in the range from 1.5 to 2.5, preferably in the range from 1.8 to 2.2, in each case measured on a 0.5% strength solution in m-cresol;
in the case of PA612, in the range from 1.5 to 2.5, preferably in the range from 2.0 to 2.3, in each case measured on a 0.5% strength solution in m-cresol.

15. The topcoat as claimed in any of the preceding claims, wherein the single-layer foil or the multilayer foil is transparent and particularly preferably printable in a printing process such as sublimation printing and/or ink-jet printing and/or screen printing and/or pad printing and/or digital printing.

16. The topcoat as claimed in any of the preceding claims, wherein the transparency value of the single-layer foil or of the multilayer foil at a thickness of 500 $\mu$m is at least 90% to ASTM D1003, illuminant C.

17. The topcoat as claimed in any of the preceding claims, wherein the modulus of elasticity of the single-layer foil or of the multilayer foil is from 1800 to 2200 MPa.

18. The topcoat as claimed in any of the preceding claims, which involves a single-layer foil.

19. The topcoat as claimed in any of claims 1 to 18, wherein a further layer, particularly preferably with admixtures of pigments, for example based on functional grafted polyolefins, has been arranged, where this further layer can have been arranged between the layer based on PA 6/12 and a print, or else more preferably the print has been arranged between the layer based on PA 6/12 and said layer with admixtures of pigments.

20. A process for production of a topcoat as claimed in any of the preceding claims, which comprises producing the layer via extrusion, at a temperature above 200°C, of the compounded constituents PA 6/12 and at least one polyamide homopolymer selected from the group of PA6, PA12, PA610, and/or PA612, and also of any additives present, and in the case of a multilayer foil this layer can be coextruded together with one or more further foils, and the foil is particularly preferably calendered after the extrusion step.

21. The process as claimed in claim 20, wherein a lamination process using pressure and/or elevated temperature, or reverse-coating or rear-injection in an injection-molding process is used to apply the foil(s) to the substrate to be protected and/or to be decorated.

22. The use of a topcoat as claimed in any of claims 1 to 19 as surface protection and/or print bearer for sports devices, particularly skis, snowboards, sticks, surfboards, skateboards, bats, etc., or for housings of devices, such as household devices, electrical devices, furniture, machines, or as surface protective layer for tableware, textiles, shoes, signage, floors, display coverings, or as surface protective layer for print bearers, such as ski passes, or decorative items.

**Revendications**

1. Revêtement superficiel, en particulier pour appareils de sport comme les skis, les planches à neige, les bâtons, les raquettes, etc. ou pour boîtiers d'appareils, comme les appareils ménagers, les appareils électriques, les meubles, les machines, comprenant un film monocouche constitué d'une couche à base de PA 6/12 ou d'un film multicouche ayant au moins une couche à base de PA 6/12,
**caractérisé en ce que** la couche à base de PA 6/12 contient en outre au moins un homopolymère de polyamide sélectionné parmi le groupe PA6, PA12, PA610 et/ou PA 612.

2. Revêtement superficiel selon la revendication 1, **caractérisé en ce que** la couche à base de PA 6/12 ne contient en outre pour l'essentiel que du PA 612 en tant que polyamide supplémentaire, le cas échéant, mélangé à des additifs supplémentaires.

3. Revêtement superficiel selon la revendication 1 ou 2, **caractérisé en ce que** la couche à base de PA 6/12 contient entre 85 - 5 % en poids de PA6/12 et 15 - 95 % en poids de PA612, de préférence entre 80 - 15 % en poids de PA6/12 et 20 - 85 % en poids de PA612, en particulier de préférence entre 75 - 25 % en poids de PA6/12 et 25 -75 % en poids de PA612.

4. Revêtement superficiel selon l'une quelconque des revendications 1 ou 2, **caractérisé en ce que** la couche à base de PA 6/12 contient au moins 10 % en poids de PA 612, ou au moins 20 % en poids de PA 612, de préférence au moins 25 % en poids de PA 612, en particulier de préférence au moins 35 % en poids de PA 612 et **en ce que** les parts en poids restantes sont formées par du PA 6/12, le cas échéant mélangé à des additifs supplémentaires.

5. Revêtement superficiel selon la revendication 1, **caractérisé en ce que** la couche à base de PA 6/12 ne contient en outre pour l'essentiel que du PA 610 en tant que polyamide supplémentaire, le cas échéant mélangé à des additifs supplémentaires.

6. Revêtement superficiel selon la revendication 1 ou 5, **caractérisé en ce que** la couche à base de PA 6/12 contient entre 60 - 5 % en poids de PA6/12 et 40 - 95 % en poids de PA610, de préférence entre 50 - 10 % en poids de PA6/12 et 50 - 90 % en poids de PA610, en particulier de préférence entre 30 - 15 % en poids de PA6/12 et 70 - 85 % en poids de PA610.

7. Revêtement superficiel selon la revendication 1, **caractérisé en ce que** la couche à base de PA 6/12 ne contient en outre pour l'essentiel que du PA 6 en tant que polyamide supplémentaire, le cas échéant mélangé à des additifs supplémentaires.

8. Revêtement superficiel selon la revendication 1 ou 7, **caractérisé en ce que** la couche à base de PA 6/12 contient entre 90 - 5 % en poids de PA6/12 et 10 - 95 % en poids de PA6, de préférence entre 80 - 10 % en poids de PA6/12 et 20 - 90 % en poids de PA6, en particulier de préférence entre 75 - 25 % en poids de PA6/12 et 25 - 75 % en poids de PA6.

9. Revêtement superficiel selon la' revendication 1,
**caractérisé en ce que** la couche a base de PA 6/12 ne contient en outre pour l'essentiel que du PA 12 en tant que polyamide supplémentaire, le cas échéant mélangé à des additifs supplémentaires.

10. Revêtement superficiel selon la revendication 1 ou 9, **caractérisé en ce** qùe la couche à base de PA 6/12 contient entre 85 - 50 % en poids de PA6/12 et 10 - - 50 % en poids de PA12, de préférence entre 80 - 50 % en poids de PA6/12 et 20 - 50 % en poids de PA12, en particulier de préférence entre 75 - 60 % en poids de PA6/12 et 25 - 40 % en poids de PA12.

11. Revêtement superficiel selon l'une quelconque des revendications précédentes, **caractérisé en ce que** la couche à base de PA 6/12 est mélangée à des additifs, s'agissant, dans le cas des additifs, d'un ou de plusieurs additifs sélectionnés parmi le groupe : nano charges,' régulateurs de chaînes, catalyseurs, lubrifiants, agents anti-blocage, agents de stabilisation, en particulier agents de stabilisation vis-à-vis de la chaleur, agents de stabilisation vis-à-vis des rayons UV, pigments, colorants et/ou agents d'amélioration de la résistance aux chocs.

12. Revêtement superficiel selon l'une quelconque des revendications précédentes, **caractérisé en ce que** le PA 6/12 présente une proportion de caprolactame dans le domaine de 46 - 98 % en poids, de préférence dans le domaine de 55 - 98 ou de 60 - 80 % en poids et/ou **en ce que** le PA 6/12 présente un point de fusion d'au moins 150°C.

**13.** Revêtement superficiel selon l'une quelconque des revendications précédentes, **caractérisé en ce que** le PA 6/12 présente une viscosité relative dans le domaine de 1,6 à 2,0, de préférence, dans le domaine de 1,80 à 1,90, mesurée à chaque fois en tant que solution à 0,5% dans le m-crésol.

**14.** Revêtement superficiel selon l'une quelconque des revendications précédentes, **caractérisé en ce que** l'homopolymère de polyamide présente,
dans le cas du PA 6 une viscosité relative dans le domaine de 3,0 à 4,0, de préférence dans le domaine de 3,5-3,8, mesurée à chaque fois en tant que solution à 1,0% dans l'acide sulfurique ;
dans le cas du PA 12 une viscosité relative dans le domaine de 2,0 à 3,0, de préférence dans le domaine de 2,1-2,4, mesurée à chaque fois en tant que solution à 0,5 % dans le m-crésol ;
dans le cas du PA610 une viscosité relative dans le domaine de 1,5 à 2,5, de préférence dans le domaine de 1,8-2,2, mesurée à chaque fois en tant que solution à 0,5% dans le m-crésol ;
dans le cas du PA 612 une viscosité relative dans le domaine de 1,5 à 2,5, de préférence dans le domaine de 2,0-2,3, mesurée à chaque fois en tant que solution à 0,5% dans le m-crésol.

**15.** Revêtement superficiel selon l'une quelconque des revendications précédentes, **caractérisé en ce que** le film monocouche ou le film multicouche est transparent et, en particulier de préférence, peut être imprimé dans un procédé d'impression comme l'impression par sublimation et/ou l'impression par jet d'encre et/ou l'impression par sérigraphie et/ou l'impression au tampon et/ou l'impression numérique.

**16.** Revêtement superficiel selon l'une quelconque des revendications précédentes, **caractérisé en ce que** le film monocouche ou le film multicouche présente, pour une épaisseur de 500 $\mu$m, une valeur de transparence conformément à la norme ASTM D1003, en type de lumière C, d'au moins 90 %.

**17.** Revêtement superficiel selon l'une quelconque des revendications précédentes, **caractérisé en ce que** le film monocouche ou le film multicouche présente un module d'élasticité de 1800 à 2200 MPa.

**18.** Revêtement superficiel selon l'une quelconque des revendications précédentes, **caractérisé en ce qu'**il s'agit d'un film monocouche.

**19.** Revêtement superficiel selon l'une quelconque des revendications 1-18, **caractérisé en ce que** l'on dispose un autre couche, en particulier de préférence mélangée à des pigments, par exemple à base de polyoléfines fonctionnelles greffées, cette couche supplémentaire pouvant être disposée entre la couche à base de PA 6/12 et une couche d'impression, ou la couche d'impression pouvant être disposée cependant, de préférence, entre la couche à base de PA 6/12 et celle mélangée à des pigments.

**20.** Procédé en vue de la fabrication d'un revêtement superficiel selon l'une quelconque des revendications Précédentes, **caractérisé en ce que** la couche est produite par une extrusion des constituants mélangés PA 6/12, et au moins un liomopolymère de polyamide sélectionné parmi le groupe PA6, PA12, PA610, et/ou PA 612 ainsi que, le cas échéant, des additifs, le cas échéant, présents à une température au-dessus de 200°C, dans le cas d'un film multicouche, cette couche pouvant être co-extrudée conjointement à un ou plusieurs autres films et, en particulier de préférence, après l'étape de l'extrusion, un calandrage du film ayant lieu.

**21.** Procédé selon la revendication 20, **caractérisé en ce que** le ou les films sont appliqués sur le substrat à protéger et/ou à décorer dans un processus de laminage avec utilisation d'une pression et/ou d'une température plus élevée ou dans un procédé d'injection par l'arrière.

**22.** Utilisation d'un revêtement superficiel selon l'une quelconque des revendications 1-19 en tant que protection et/ou support d'impression superficiel pour des appareils sportifs, comme les skis, les planches à neige, les bâtons, les planches de surf, les planches à roulettes, les raquettes, etc. ou pour les boîtiers d'appareils comme les appareils ménagers, les appareils électriques, les meubles, les machines ou en tant que couche protectrice superficielle pour la vaisselle, les textiles, les chaussures, les enseignes, les sols, les recouvrements d'affichage, en tant que couche protectrice superficielle pour les supports d'impression, comme, par exemple, les cartes de forfaits de ski, les articles de décoration.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004020054 A
- EP 0442262 A
- EP 0774365 A
- WO 0023512 A
- EP 0734833 A
- US 20050084685 A
- WO 2004037898 A
- US 20020173596 A
- EP 1227132 A
- EP 0779084 A